**Europäisches Patentamt**

**European Patent Office**

**Office européen des brevets**

(19)

(11) Veröffentlichungsnummer: **0 067 147**
**A1**

(12) ## EUROPÄISCHE PATENTANMELDUNG

(21) Anmeldenummer: **82890084.5**

(22) Anmeldetag: **03.06.82**

(51) Int. Cl.³: **B 27 M 3/06,** B 07 C 5/14,
B 65 G 47/08

(30) Priorität: **04.06.81 AT 2500/81**

(43) Veröffentlichungstag der Anmeldung: **15.12.82**
**Patentblatt 82/50**

(84) Benannte Vertragsstaaten: **BE CH DE FR GB IT LI LU NL
SE**

(71) Anmelder: **Fischer, Johann, Dipl.-Ing., Lauterbach 12,
A-5152 Michaelbeuern (AT)**

(72) Erfinder: **Fischer, Johann, Dipl.-Ing., Lauterbach 12,
A-5152 Michaelbeuern (AT)**

(74) Vertreter: **Torggler, Paul, Dr. et al, Patentanwälte Dr.
Paul Torggler Dr. Engelbert Hofinger
Wilhelm-Greil-Strasse 16, A-6020 Innsbruck (AT)**

(54) **Verfahren zum Mischen von Lamellen, insbesondere von Parkettlamellen.**

(57)  Fortlaufend von einem Holzbalken od. dergl. abgeschnittene Lamellen weisen von Lamelle (2) zu Lamelle (2) eine geringfügig, insgesamt jedoch eine merklich wechselnde Struktur auf. Es
werden, um Strukturierungsschwerpunkte zu vermeiden, Gruppen (a, b, c, d) von aufeinanderfolgenden Lamellen (2) in einer
Ausgangsreihe (1) angeordnet, und einzelne Lamellen (2') aus
jeder Gruppe (a, b, c, d) entnommen und zu einer neuen Gruppe
(a', b', ...) zusammengesetzt. Diese neuen Gruppen (a', b', ...) in
denen Lamellen (2') mit merklich unterschiedlicher Strukturierung vorliegen, werden zu einer vermischten Reihe (1') zusammengesetzt. Die vermischte Reihe (1') weist dadurch eine gleichmässigere Verteilung von merklich unterschiedlich strukturierten
Lamellen (2') auf.

EP 0 067 147 A1

- 1 -

## Verfahren zum Mischen von Lamellen, insbesondere von Parkettlamellen

Die Erfindung betrifft ein Verfahren zum Mischen von Lamellen, insbesondere von Parkettlamellen, und eine Vorrichtung zu dessen Durchführung.

Lamellen stellen dünnere Holzbrettchen dar, die fortlaufend von Holzfriesen od. dgl. geschnitten werden. Da die Struktur jedes Friesens nicht gleichmäßig ist, sondern sich merklich verändert, entstehen daher Lamellen, die gruppenweise im wesentlichen gleich struturiert sind. Insbesondere bei der Parkettherstellung (Fertigparkettplatten etc.), aber auch bei anderen Belagsplatten sollen jedoch unterschiedlich strukturierte Lamellen möglichst regelmäßig aneinanderliegen, sodaß insgesamt eine gleichartige Strukturierung der Belagsplatte und des gesamten Belages erzielt wird, und keine auffälligen Strukturierungsschwerpunkte vorherrschen.

Es ist daher üblich, die Lamellen vor ihrer Verbindung zu Belagsplatten zu vermischen. Beispielsweise werden die fortlaufend geschnittenen Lamellen in Silos fallen gelassen, wodurch sie sich in ungeordneter Weise vermischen. Der wesentliche Nachteil dieser Vorgangsweise liegt jedoch darin, daß die Kanten und Ecken der Lamellen bei der Einbringung und vor allem bei der Entnahme stark beschädigt werden. Es ist weiters be-

0067147

kannt, anstelle von Silos sich drehende Mischtrommeln zu verwenden, in denen jedoch dieselben Beschädigungen auftreten. Weiters ist es bei diesen bekannten Verfahren notwendig, die gemischten Lamellen zu ordnen, um sie über die üblichen Transportbahnen zur Weiterverarbeitung zu transportieren.

Nach einem dritten bekannten Verfahren werden die Lamellen in kleine Behälter geordnet eingefüllt, aus denen sie wieder wahlweise entnommen werden, sodaß auch hier vermischte Reihen für die Weiterverarbeitung auf der Transportbahn zur Verfügung stehen. Dieses Verfahren vermeidet zwar weitgehend eine Beschädigung der Lamellen, jedoch sind ständige Unterbrechungen des Fertigungsablaufes erforderlich, um die Behälter zu beschicken. Eine völlige Automatisierung dieses Verfahrens ist nicht erzielbar und durch die Behälter auf eine Lamellengröße festgelegt.

Weiters zeigt noch die AT-PS 192.108 für die Herstellung von Mosaikparkett eine Anlage, die die Lamellen in zwei getrennte Zufuhreinrichtungen aufspaltet, wodurch jedoch eine ausreichende Mischung nicht erzielt werden kann.

Die Erfindung hat es sich nun zur Aufgabe gestellt, ein Mischverfahren und eine Vorrichtung zu schaffen, die einerseits eine Beschädigung der Lamellen ausschließt, und andererseits in einen kontinuierlichen Fertigungsablauf eingesetzt werden kann, wobei es in einfacher Weise auch an geänderte Lamellendimensionen anpaßbar sein soll.

Diese Aufgabe wird nun dadurch gelöst, daß in Gruppen nebeneinander angeordnete Lamellen, die von Gruppe zu Gruppe eine unterschiedliche Strukturierung, innerhalb jeder Gruppe jedoch eine im wesentlichen gleiche Strukturierung aufweisen, in einer Ausgangsreihe angeordnet und gefördert werden, worauf - in sich wiederholenden Arbeitsphasen - an vorbestimmten Stellen Lamellen aus mehreren Gruppen entnommen werden, diese jeweils zu einer neuen Gruppe unterschiedlicher Strukturierung, und die neuen Gruppen zu einer vermischten Reihe zusammengesetzt werden.

Insbesondere ist dabei vorgesehen, daß die Lamellen aus den Gruppen gleicher Strukturierung senkrecht zur Förderrichtung entnommen werden und die vermischte Reihe parallel zur Förderrichtung weiterbewegt wird.

Die Entnahmestellen werden vorbestimmt, wobei sich dies nach der Qualität der herzustellenden Mischung, nach der Größe der Gruppen mit im wesentlichen gleicher Strukturierung usw. richtet. Nach dem Entfernen der ausgewählten Lamellen aus der Ausgangsstelle füllt sich diese durch Zusammenschieben wieder auf, worauf an denselben Stellen, gegebenenfalls auch an anderen, wiederum Lamellen entnommen werden usw.

In einer weiteren Fortbildung dieses Verfahrens kann vorgesehen werden, daß die neuen Gruppen unterschiedlicher Strukturierung um 180° gewendet zu einer vermischten Reihe zusammengesetzt werden. Da die ausgewählten Lamellen gruppenweise gewendet werden, kann zusätzlich auch eine Umkehrung der Reihenfolge innerhalb jeder vermischten Reihe stattfinden, wenn die Bewegungsrichtung der ausgewählten Lamellen vor der Wendung gewechselt wird. Wird die Bewegungsrichtung nicht oder nach der Wendung ein zweites Mal gewechselt, bleibt in bezug auf die ursprüngliche Reihenfolge die Reihenfolge innerhalb der vermischten Gruppe gleich.

Zur Durchführung des oben genannten Verfahrens eignet sich eine Vorrichtung, die einen Anschlag am Ende einer ersten Transportbahn, auf die die Ausgangsreihe mit verschiedenen Gruppen gleicher Lamellen aufläuft, quer zur Förderrichtung bewegbare Mit-

- 4 -

0067147

nehmer, die einzelnen Lamellen zugeordnet sind, und eine zweite parallel neben der ersten angeordnete Transportbahn aufweist, die die von den Mitnehmern aus der Ausgangsreihe ausgewählten Lamellen übernimmt.

Da die Lamellen aus den Gruppen der Ausgangsreihe bevorzugt in der Transportbahnebene ausgeschoben werden, sieht eine Ausführung der Vorrichtung vor, daß zwischen der ersten und der zweiten Transportbahn eine Anschlagleiste als Seitenbegrenzung für die Lamellen angeordnet ist, in der für jede ausgewählte Lamelle eine Durchtrittsöffnung vorgesehen ist. Diese Anschlagleiste ist, da die Entnahmestellen beliebig wählbar sein sollen, entweder als ganzes austauschbar oder aus Teilen zusammengesetzt in einer seitlichen Halterung gehalten, wobei bei Änderung der Entnahmestellen die betreffenden Teile gewechselt werden können.

Eine weitere Ausführung der Vorrichtung sieht vor, daß der Anschlag mit einem federbeaufschlagten Schalthebel versehen ist, der nach Überwindung der Federkraft den Antrieb der Mitnehmer einschaltet. Hiedurch wird beim Nachschieben der Ausgangsreihe nach Entnahme der ausgewählten Lamellen erreicht, daß die Querfördereinrichtung der Mitnehmer erst dann in Bewegung gesetzt wird, wenn die Ausgangsreihe keine Lücken mehr aufweist. Der Schalthebel kann weiters auch gleichzeitig dazu verwendet werden, die Förderung der Lamellen auf der ersten Transportbahn zu unterbrechen sowie auch den Antrieb der zweiten Transportbahn zu steuern.

Alle Mitnehmer sind vorzugsweise verschiebbar auf einem gemeinsamen Träger angeordnet, der senkrecht zur Förderrichtung bewegbar ist. Hiezu eignen sich beispielsweise zwei synchron laufende Zugmitteltriebe, vorzugsweise umlaufende Kettentriebe, an denen die beiden Enden des Trägers befestigt sind.

In einer weiteren Ausführung der Vorrichtung, mittels der auch die Wendung der ausgewählten Lamellen vorgenommen werden kann, ist vorgesehen, daß die zweite Transportbahn ein umlaufendes Förderband bildet, dessen vorderer Umlenktrommel mit Abstand zum Förderband ein Leitelement zugeordnet ist, das die ausgewählten Lamellen während der Wendung um 180$^{\circ}$ am Förderband anliegend hält, wobei unterhalb des umlaufenden Förderbandes eine dritte Transportbahn vorgesehen ist, die die gewendeten Lamellen übernimmt und zur vermischten Reihe zusammensetzt. Gegebenenfalls kann je nach der gewünschten Reihenfolge der Lamellen in den vermischten Gruppen bzw. der Reihenfolge der Gruppen in der vermischten Reihe die Bewegungsrichtung des Förderbandes gewählt werden. Soll dies möglich sein, ist beiden Umlenktrommeln des Förderbandes ein Leitelement, beispielsweise ein gekrümmtes Gleitblech, zugeordnet.

Nachstehend wird nun die Erfindung an Hand der Figuren der beiliegenden Zeichnungen näher beschrieben, ohne darauf beschränkt zu sein.

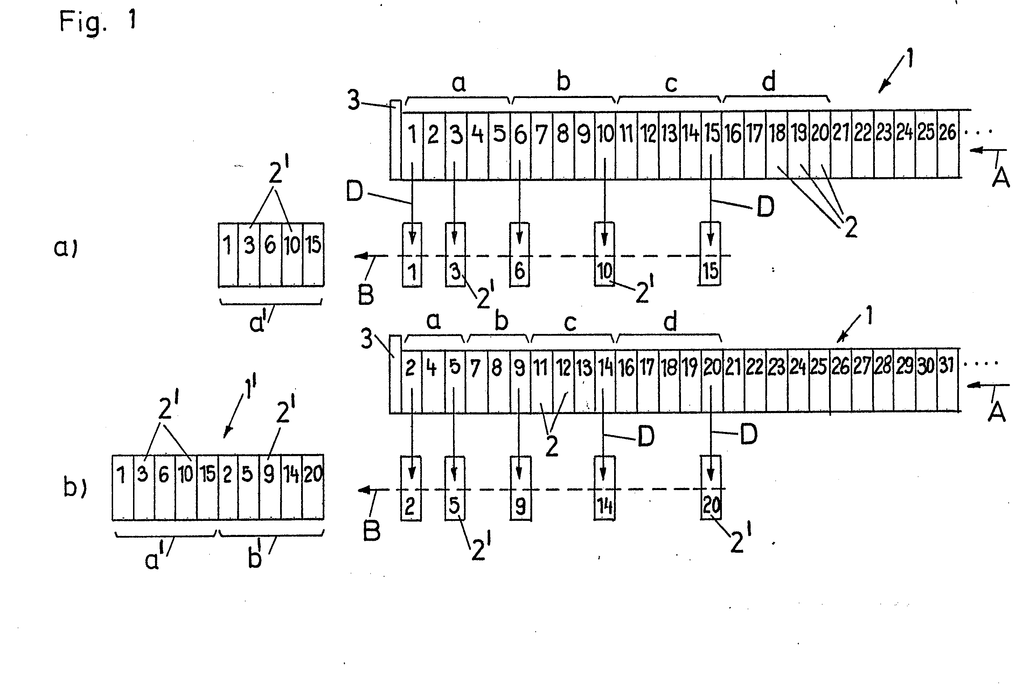

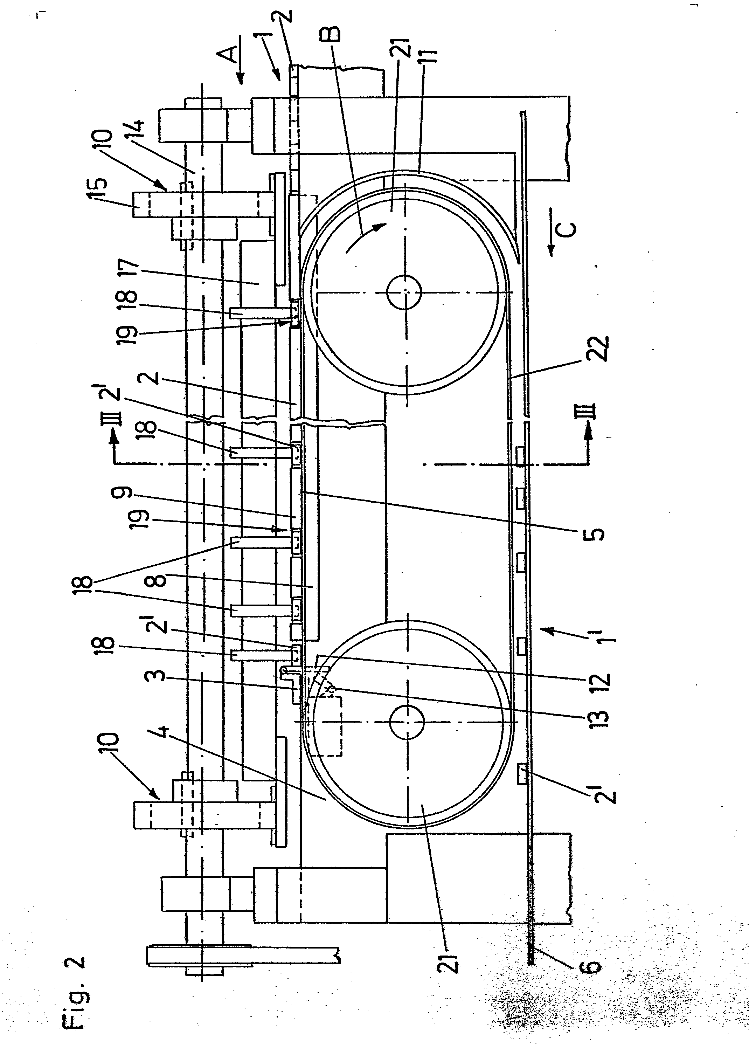

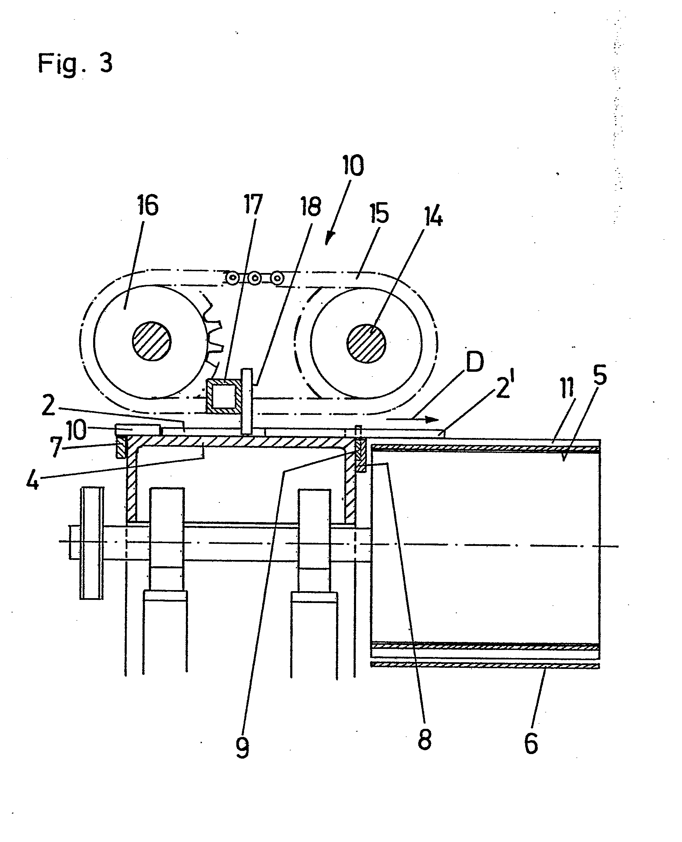

Die Fig. 1 zeigt eine schematische Darstellung der beiden ersten aufeinanderfolgenden Arbeitsphasen des Mischverfahrens ohne Wendung der Lamellen, die Fig. 2 zeigt eine Ansicht einer Ausführung der erfindungsgemäßen Einrichtung und die Fig. 3 einen Schnitt nach der Linie III-III der Fig. 2.

Gemäß Fig. 1 wird beim erfindungsgemäßen Mischverfahren wie folgt vorgegangen: Die Lamellen 2, die fortlaufend aus einem Holzbalken geschnitten werden, werden in der Schnittreihenfolge auf einer ersten Transportbahn 1 angeordnet und in Förderrichtung A an einem Anschlag 3 bewegt. Die Lamellen 2 können aus der Schnittreihenfolge heraus willkürlich in Gruppen a, b, c, d angeordnet betrachtet werden, die eine im wesentlichen gleiche Strukturierung aufweisen, die sich jedoch von

0067147

Gruppe zu Gruppe auf Grund der sich über die Länge des Holzbalkens ändernden Holzstruktur (Maserung, Farbe) unterscheidet. Die Strukturierung wird zwar in benachbarten Gruppen noch ähnlich sein, die Unterschiede werden sich jedoch mit zunehmendem Gruppenabstand ändern. Zur Mischung der Lamellen 2 werden nun an beliebig bestimmbaren Stellen, die sich aus dem Änderungsausmaß der Holzstruktur und der Qualität der zu erzielenden Mischung (möglichst regelmäßige Gesamtstruktur der herzustellenden Belagsplatte) bestimmten Lamellen 2' senkrecht zur Förderrichtung A entsprechend den Pfeilen D ausgeschoben, und die ausgewählten Lamellen 2' in Richtung des Pfeiles B weiterbewegt, wodurch sich eine vermischte Gruppe a' bildet (Teilfigur a). Im nächsten Arbeitsschritt, der in der Teilfigur b gezeigt ist, werden die Lamellen 2 der Ausgangsreihe 1 zusammengeschoben (Pfeil A) und an denselben Stellen wiederum einzelne Lamellen seitlich ausgeschoben. Diese neuerlich ausgewählten Lamellen 2' werden nun ebenfalls in Richtung des Pfeiles B weiterbewegt, wodurch sich eine zweite vermischte Gruppe b' bildet, die an die erste vermischte Gruppe a' angeschlossen wird. Aus den vermischten Gruppen a', b' und den in den nächsten Arbeitsschritten gebildeten wird eine vermischte Reihe 1' aufgebaut, die der Weiterverarbeitung zugeführt wird.

Eine zur Durchführung des Verfahrens geeignete Vorrichtung zeigen die Figuren 2 und 3. Auf der Transportbahn 4 werden die unvermischten Lamellen 2 in einer Ausgangsreihe 1 heranbefördert. Sobald die vorderste Lamelle 2 an einem Anschlag 3 anliegt, und der Schub der Fördereinrichtung einen dem Anschlag 3 zugeordneten, federbelasteten Hebel 12 bewegt, wird ein Schalter 13 betätigt. Dadurch wird ein Querförderer in Bewegung gesetzt, der die ausgewählten Lamellen 2' aus der Ausgangsreihe 1 ausschiebt. Der Querförderer setzt sich aus zwei synchron umlaufenden Zugmitteltrieben 10, insbesondere Kettentrieben 15, zusammen, die durch einen Träger 17 verbunden sind, und an dem über die Länge
des Trägers 17 verteilt eine der ausgewählten Zahl von
Lamellen 2' entsprechende Zahl von Mitnehmern 18 befestigt ist. Die Mitnehmer 18 können beispielsweise verschiebbar befestigt sein, so daß sie dem Abstand der
Entnahmestellen anpaßbar sind; sie können zur Anpassung an die Zahl der Entnahmestellen auch lösbar befestigt sein. Weiters ist es auch denkbar, den Träger 17
mit der maximalen Zahl von höhenverschiebbaren Mitnehmern 18 zu bestücken, wobei nur die benötigten nach
unten in Eingriffsstellung gebracht werden. Da die
Entnahme der ausgewählten Lamellen 2' in Richtung des
Pfeils D (Fig. 2) senkrecht zur Förderrichtung A erfolgt, ist seitlich an der Transportbahn 4 ein Längsanschlag vorgesehen, der aus einer Halterung 8 und
Durchtrittsöffnungen 19 bzw. Ausnehmungen für die ausgewählten Lamellen 2' aufweisenden Anschlagleiste 9 besteht. Die Anschlagleiste 9 kann austauschbar sein, um
die Durchtrittsöffnungen 19 verschiedenen Entnahmestellen anzupassen, sie kann auch aus austauschbaren Einzelteilen zusammengesetzt sein, von denen jeder eine Lamelle zugeordnet ist, und die Durchtrittsöffnungen 19 bzw.
Ausnehmungen durch Teile geringerer Höhe erzielt werden. Von den Kettenrädern 16, um die die Kettentriebe
15 umlaufen, ist die Welle des, jeweils in Richtung
D gesehen, vorderen Kettenrades 16 angetrieben, sodaß
der Kettentrieb 15 zwischen dem Antrieb und dem Träger
17 auf Zug beansprucht wird. Da die Kettentriebe 15
bevorzugt umlaufen, ist auch eine andersseitige Anschlagleiste 7 an der Transportbahn 4 so ausgebildet, daß
die Mitnehmer 18 Ausnehmungen 20 beim Umlauf durchtreten
können, wobei die Festlegung dieser Ausnehmungen 20
ebenfalls variabel in Anpassung an die Entnahmestellen
erfolgt.

Die von den Mitnehmern 18, von denen der in Richtung A gesehen vorderste immer die am Anschlag 3 anliegende Lamelle 2 anschiebt, bewegten Lamellen 2' gelangen dabei auf eine zweite Transportbahn 5, die im Ausführungsbeispiel durch ein umlaufendes Förderband gebildet wird. Das Förderband 5 wird ebenfalls durch den Schalter 13 betätigt, wobei es während der Bewegung der Kettentriebe 15 ebenso wie die Transportbahn 4 stillsteht, bei Stillstand der Kettentriebe 15 jedoch in Richtung des Pfeiles B in Bewegung ist. Die ausgewählten Lamellen können nun durch das Förderband, wie erwähnt, zu einer vermischten Reihe 1' zusammengeschoben und weitertransportiert werden.

Im dargestellten Ausführungsbeispiel ist aber noch weiters vorgesehen, daß die Lamellen 2' vor ihrem Weitertransport um 180° gewendet werden, daß also die in der Ausgangsreihe 1 aufscheinende Oberseite der Lamellen 2 nach der Wendung die Unterseite der Lamellen 2' bildet. Zur Führung der ausgewählten Lamellen 2' ist nun zumindest im Abstand zu einer Umlenktrommel 21 des Förderbandes 5 ein Leitelement 11 angeordnet, durch das die Lamellen 2' auf eine unterhalb des Förderbandes verlaufende, dritte Transportbahn 6, vorzugsweise ebenfalls ein Förderband, gelangen, auf dem sie in Richtung des Pfeiles C weitertransportiert und zur vermischten Reihe 1' zusammengesetzt werden. Die Transportrichtungen A und B sind einander entgegengesetzt und die Transportrichtungen B und C gleichgerichtet. Dies bedeutet, daß die Lamellen 2' innerhalb der vermischten Gruppe in umgekehrter Reihenfolge in die vermischte Reihe 1' eingebracht werden. Wenn die Transportrichtungen B und C umgedreht werden, wird die ursprüngliche Reihenfolge beibehalten. Es kann daher, wenn auch der zweiten Umlenktrommel 21 ein Leitelement 11 zugeordnet wird, auch ein gruppenweiser Wechsel der Richtung B erfolgen, sodaß die vermischten Gruppen a', b' in der vermischten Reihe 1' eine wechselweise, umgekehrte Reihenfolge der Lamellen

0067147

aufweisen, wobei während der Bewegung des Förderbandes 5, entgegengesetzt dem Pfeil B, auch die Transportbahn 6 umgekehrt bewegt wird. Während des Stillstandes des Förderbandes 5, also während der Bewegung der Kettentriebe 15, und während der Bewegung des Förderbandes 5 in Richtung B läuft hingegen die Transportbahn 6 in Richtung des Pfeiles C, wodurch die Gruppen a', b' zur vermischten Reihe 1' zusammengeschoben werden. Es ist selbstverständlich möglich, die vermischte Reihe 1' in weiterer Folge durch eine zweite Vorrichtung laufen zu lassen, in der das erfindungsgemäße Verfahren ein weiteres Mal angewandt wird.

- 10 -

0067147

PATENTANSPRÜCHE

1. Verfahren zum Mischen von Lamellen, insbesondere von Parkettlamellen, dadurch gekennzeichnet, daß in Gruppen (a, b, c, d) nebeneinander angeordnete Lamellen (2), die von Gruppe zu Gruppe eine unterschiedliche Strukturierung, innerhalb jeder Gruppe jedoch eine im wesentlichen gleiche Strukturierung aufweisen, in einer Ausgangsreihe (1) angeordnet und gefördert werden, worauf - in sich wiederholenden Arbeitsphasen - an vorbestimmten Stellen Lamellen (2') aus mehreren Gruppen (a, b, c, d) entnommen werden, diese jeweils zu einer neuen Gruppe (a', b') unterschiedlicher Strukturierung, und die neuen Gruppen (a', b') zu einer vermischten Reihe (1') zusammengesetzt werden.

2. Verfahren nach Anspruch 1, dadurch gekennzeichnet, daß die Lamellen (2) aus den Gruppen (a, b, c, d) gleicher Strukturierung senkrecht zur Förderrichtung (A) entnommen werden und die vermischte Reihe (1') parallel zur Förderrichtung (A) weiterbewegt wird.

3. Verfahren nach Anspruch 1 oder 2, dadurch gekennzeichnet, daß die neuen Gruppen (a', b') unterschiedlicher Strukturierung um 180° gewendet zu einer vermischten Reihe (1') zusammengesetzt werden.

4. Vorrichtung zur Durchführung des Verfahrens nach Anspruch 1 und 2, gekennzeichnet durch einen Anschlag (3) am Ende einer ersten Transportbahn (4), auf den die Ausgangsreihe (1) mit verschiedenen Gruppen (a, b, c, d) gleicher Lamellen (2) aufläuft, durch quer zur Förderrichtung (A) bewegbare Mitnehmer (18), die einzelnen Lamellen (2') zugeordnet sind, und durch eine zweite parallel neben der ersten angeordneten Transportbahn (5), die die von den Mitnehmern (18) aus der Ausgangsreihe (1) ausgewählten Lamellen (2') übernimmt.

5. Vorrichtung nach Anspruch 4, dadurch gekennzeichnet, daß zwischen der ersten und der zweiten Transportbahn (4, 5) eine Anschlagleiste (9) als Seitenbegrenzung für die Lamellen (2) angeordnet ist, in der für jede ausgewählte Lamelle (2') eine Durchtrittsöffnung (19) vorgesehen ist.

6. Vorrichtung nach Anspruch 4, dadurch gekennzeichnet, daß der Anschlag (3) mit einem federbeaufschlagten Schalthebel (12) versehen ist, der nach Überwindung der Federkraft den Antrieb der Mitnehmer (18) einschaltet.

7. Vorrichtung nach Anspruch 4 oder 6, dadurch gekennzeichnet, daß alle Mitnehmer (18) an einem gemeinsamen Träger (17) verschiebbar angeordnet sind, der senkrecht zur Förderrichtung (A) bewegbar ist.

8. Vorrichtung nach Anspruch 7, dadurch gekennzeichnet, daß der Träger (17) an zwei synchron bewegbaren Zugmitteltrieben (10) befestigt ist.

9. Vorrichtung nach Anspruch 8, dadurch gekennzeichnet, daß die Zugmitteltriebe (10) umlaufende Kettentriebe (15) sind.

10. Vorrichtung nach Anspruch 4, zur Durchführung des Verfahrens nach Anspruch 3, dadurch gekennzeichnet, daß die zweite Transportbahn (5) ein umlaufendes Förderband (22) bildet, dessen vorderer Umlenktrommel (21) mit Abstand zum Förderband (22) ein Leitelement (11) zugeordnet ist, das die ausgewählten Lamellen (2') während der Wendung um 180° am Förderband (22) anliegend hält, wobei unterhalb des umlaufenden Förderbandes (22) eine dritte Transportbahn (6) vorgesehen ist, die die gewendeten Lamellen (2') übernimmt und zur vermischten Reihe (1') zusammensetzt.

Fig. 1

a)

b)

Fig. 2

Fig. 3

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | CH-A- 383 612 (CONSORTIUM CLARO) *Figuren 10 und 11; Seite 2, Zeile 86 - Seite 3, Zeile 34; Seite 3, Zeilen 70-75; Unteransprüche 4 und 5* | 1-5,10 | B 27 M  3/06 B 07 C  5/14 B 65 G  47/08 |
| | --- | | |
| Y | CH-A- 374 185 (METZGER) *Figuren 1-14; Seite 1, Zeilen 1-44; Seite 2, Zeilen 14-74; Patentansprüche I-III* | 1,3,10 | |
| | --- | | |
| A | FR-A-1 242 664 (AKTIENGESELLSCHAFT PARQUETERIE VON J.DURRER KÄGISWIL) *Figuren 1 und 2; Seiten 1 und 2* | 1 | |
| | ----- | | |

| | RECHERCHIERTE SACHGEBIETE (Int. Cl. ³) |
|---|---|
| | B 07 C  5/00 B 07 C  5/02 B 07 C  5/14 B 07 C  5/36 B 07 C  5/38 B 27 G  1/00 B 27 M  3/04 B 27 M  3/06 B 65 G  47/08 B 65 G  47/82 B 65 G  47/84 |

Der vorliegende Recherchenbericht wurde für alle Patentansprüche erstellt.

| Recherchenort DEN HAAG | Abschlußdatum der Recherche 27-08-1982 | Prüfer PESCHEL W. |
|---|---|---|

EPA Form 1503. 03.82